# EUROPÄISCHE PATENTSCHRIFT

(11) **EP 0 505 720 B1**
(45) Veröffentlichungstag und Bekanntmachung des Hinweises auf die Patenterteilung: **17.05.1995**
(21) Anmeldenummer: 92102705.8
(22) Anmeldetag: 19.02.1992
(51) Int. Cl.: F01N 3/28, F01N 3/02

(54) **Halterung eines Trägerkörpers in Abgasanlagen von Fahrzeugen**
Mounting of a carrier for exhaust purification in exhaust systems of vehicles
Montage d'un support de purification dans une installation d'échappement pour véhicules

(30) Priorität: 23.03.1991 DE 4109626
(43) Veröffentlichungstag der Anmeldung: 30.09.1992
(73) Patentinhaber: Firma J. Eberspächer, D-73730 Esslingen (DE)
(72) Erfinder: Schumacher, Herbert, Dipl.-Ing., W-7061 Lichtenwald (DE); Wörner, Siegfried, Dipl.-Ing., W-7300 Esslingen-Berkheim (DE)

(56) Entgegenhaltungen:
- EP-A- 0 177 479
- EP-A- 0 193 072
- EP-A- 0 217 493
- DE-A- 2 222 663
- DE-A- 2 343 973
- DE-A- 3 836 626
- DE-U- 8 812 762

## Beschreibung

Die Erfindung betrifft die Halterung mindestens eines Trägerkörpers zur Abgasreinigung in Abgasanlagen von Fahrzeugen mit einem ein Gehäuse bildenden Außenmantel und einem mit Abstand hierzu den Trägerkörper (1) unmittelbar umgebenden und überragenden Innenmantel (3), der im Bereich einer Stirnseite mit dem Außenmantel (2) fest verbunden und im Bereich der anderen Stirnseite in einem Schlebesitz gehalten ist.

Dabei kann es sich bei dem Trägerkörper um einen aus einem gewellten oder glatten Metallstreifen gebildeten Wickelkörper, mit oder ohne katalytisch wirksamer Beschichtung, z.B. nach der DE 38 09 105.4 A1 handeln oder um einen katalytisch beschichteten Monolithen, z.B. wie in der DE 37 00 070.5 A1.

Bei allen Arten von Trägerkörpern besteht das Problem den empfindlichen Trägerkörper so zu lagern bzw. zu halten, daß trotz unterschiedlicher thermisch bedingter Ausdehnung von Trägerkörper und Gehäuse eine sichere Halterung in allen Betriebszuständen, d.h. in allen auftretenden Temperaturbereichen erreicht wird, mit einer ausreichenden Festigkeit gegenüber Schwingungsbrüchen, die durch das pulsierend auftreffende Abgas bedingt sein können. Ferner besteht die Forderung, den Körper so zu lagern und zu halten, daß möglichst die gesamte Abgasmenge durch diesen Körper geführt wird, da jeder den Körper umströmende Teil des Abgases nicht gereinigt wird. Die gleichen Überlegungen gelten auch für Anordnungen für die Reinigung von Abgasen von Rußpartikeln, den sogenannten Rußfiltern, so daß sich die vorliegende Erfindung auf beide Arten von Abgasreinigungseinrichtungen bezieht, ferner auch für Anordnungen mit zwei oder mehreren hintereinander angeordneten Trägerkörpern in einem gemeinsamen Gehäuse.

Wegen der Problematik der Lagerung bzw. Halterung der Trägerkörper gibt es auch bereits eine große Anzahl von Lösungsvorschlägen. So beschreibt z.B. die DE 22 61 663 A1 eine Anordnung zur katalytischen Reinigung von Abgas, bei welcher der Katalysatorkörper, ein beschichteter Monolith, in stirnseitig umgreifenden Ringen gelagert ist, wobei diese Ringe aus einem Hohlring aus Metallfolie mit einer Kernfüllung aus Drahtgestrick oder Keramikfasern gebildet sind und als Abstützelement und Dichtung gegen umströmendes Abgas wirken. Ein derartig gelagerter und gehaltener Katalysatorkörper ist jedoch nicht gegen Abstrahlen der Wärme geschützt, so daß in ihm die erforderliche Temperatur nicht gehalten werden kann, außerdem kann es zu Verspannungen kommen, die zu einem Bruch des Monolithen führen können. Es ist nach der DE 22 13 539 A1 auch bereits bekannt, einen Monolithen durch eine durchgehende, sich über die ganze Länge und den Stirnkantenbereich sich erstreckende Mineralfasermatte zu halten. Es sind auch bereits doppelschalige, aus Halbschalen gebildete Halterungen bekannt, bei denen die Innenschale mindestens in einem Teil des Monolithaufnahmebereichs an das Gehäuse herangeführt und dort an diesem durch Schweißung oder durch Sickenverbindung befestigt ist (DE 37 00 070 A1). Alle diese Lösungen befriedigen die Bedürfnisse nicht, da sie entweder nicht zuverlässig lagern bzw. halten oder zu aufwendig in der Montage sind und aus zu vielen Einzelteilen aufgebaut sind, deren Toleranzen sich addieren und die zu Verspannungen führen können. Vergleichbare Anordnungen sind auch für Metallträger bekannt, die die gleichen Nachteile aufweisen.

Aus dem DE-GM 88 12 762 ist eine Anordnung zur Lagerung von Trägerkörpern für die Abgasreinigung bekannt, bei der in einem Außenrohr bei zwei Trägerkörpern diese hintereinander jeweils in einem separaten und in der Formgebung unterschiedlichen Innenrohr mit die Trägerkörper jeweils beidseitig überragenden Abschnitten konzentrisch im Abstand zum Außenrohr derart gelagert sind, daß die einander zugewandten, überragenden Abschnitte der Innenrohre aufeinanderliegend einen Schiebesitz bilden, während die anderen überragenden Abschnitte der Innenrohre jeweils mit dem Außenrohr fest verbunden sind. Diese bekannte Art der Lagerung weist jedoch eine Reihe von Nachteilen auf. So ist z.B. das paßgenaue Einsetzen der Trägerkörper in das beiderseits überstehende Innenrohr schwierig, außerdem das "Einfädeln" der überragenden Abschnitte zur Bildung eines Schiebesitzes, insbesondere hinsichtlich der beachtlichen Länge der Innenrohre. Bei den hintereinander angeordneten Trägerkörpern verlangt jeder Trägerkörper ein anderes geformtes Innenrohr, so daß eine aufwendige Lagerhaltung erforderlich ist.

Aus der EP-A-0 177 479 ist die Halterung eines Trägerkörpers bekannt, bei der der Trägerkörper auf beiden Seiten von einem Innenrohr überragt wird, wobei das Innenrohr wiederum von einer Isoliermatte umgeben und in einem Außenrohr gelagert ist. Das Außenrohr ist bei dieser bekannten Anordnung abgaseintrittsseitig fest und abgasaustrittsseitig unter Bildung eines Schiebesitzes mit dem Innenrohr verbunden; der Abgaseintrittstrichter mit dem Innenrohr verschweißt. Diese Anordnung ist insbesondere bezüglich ihrer Montage sehr aufwendig. Die Füllung des Raumes zwischen Innenrohr und Außenrohr mit einem Wärmeisolierstoff bedeutet die Verwendung eines wenig umweltfreundlichen Materials, das praktisch nicht entsorgbar ist. Außerdem hat diese Anordnung den Nachteil, daß die Schweißverbindung zwischen Innenrohr, Außenrohr und Abgaseintrittstrichter sehr aufwendig ist und an der heißesten Stelle liegt.

Der vorliegenden Erfindung liegt die Aufgabe zugrunde, eine Halterung gemäß dem gattungsbildenden EP-A-0 177 479 für mindestens einen Trägerkörper dahingehend zu verbessern, daß sie den Trägerkörper zuverlässig gegen Schwingungsbrüche gesichert hält, ferner Vereinfachungen in der Montage bringt und dabei ausreichend gegen das Umströmen von ungereinigtem Abgas gesichert ist und daß dabei gleichzeitig die Mantel- (Außenmantel-) Temperatur herabgesetzt ist, ohne Verwendung einer durchgehenden Wärmeisolierung.

Diese Aufgabe wird dadurch gelöst,
- daß der Innenmantel den Trägerkörper an nur einer Seite mit einem Abschnitt überragt,
- der Außenmantel unter Bildung eines Luftspaltes den Innenmantel umgibt,
- der Außenmantel im Bereich des zylindrischen Abschnittes radial geteilt ist und mit beiden Abschnitten auf dem Abschnitt des Innenmantels aufliegt und mit ihm fest verbunden ist,
- der Außenmantel an der dem Abschnitt abgewandten Seite radiale Sicken mit einem Gestrickring zwischen dem Außenmantel und dem Innenmantel aufweist.

Damit ist eine Halterung aufgezeigt, bei welcher bei dem Zusammenbau außer einem Gestrickring keinerlei zusätzliche Bauteile erforderlich sind und bei der eine Luftspaltisolierung erreicht wird. Die Herstellung und Montage einer derartigen Halterung ist sehr einfach und ohne Hilfsmittel möglich. Bei einer Anordnung mit nur einem metallischen Trägerkörper wird der Trägerkörper in ein den Mantel bildendes Rohrstück bis zum einseitigen Abschluß eingesetzt, so daß der Mantel einseitig übersteht, sodann werden die beiden das Gehäuse bildenden Halbschalen in dem zylindrischen Teil ihrer Längserstreckung im Bereich des überstehenden Abschnittes des Mantels des Trägerkörpers geteilt. Bei der Montage wird der bekannte Gestrickring an einer evtl. markierten Stelle um den Trägerkörper gelegt und beide Teile, Trägerkörper samt Mantel und Gestrickring, in die Halbschalenteile mit dem den Trägerkörper abdeckenden zylindrischen Abschnitt gelegt, an den die abgetrennten Halbschalenteile anliegen, wobei zwischen den ersten, langen Halbschalenteilen und diesen ein Abstand besteht und sodann werden die drei Teile Mantel, lange Halbschalenteile und kurze Halbschalenteile miteinander fest verbunden, z.B. durch Schweißen. Die Verschweißung - oder Bördelung - der Halbschalen ist ein üblicher Vorgang (Längsschweißung). Es ist bei dieser Halterung ganz wesentlich, daß die Verschweißung der Halbschalenteile mit dem Mantel außerhalb (vor oder hinter) dem Trägerkörper erfolgt, da sonst bei dem Schweißen eine lokale Überhitzung des Trägerkörpers auftreten würde, was zur zumindest lokalen Zerstörung des Trägerkörpers führen könnte. Bei dem metallischen Trägerkörper, der als Wickelkörper ausgebildet ist, kann dabei der Mantel auch angeformt sein, d.h. beim Zuschnitt wird die letzte Lage - oder die letzten Lagen - einseitig breiter geschnitten, so daß diese letzte Lage - oder Lagen - den einseitig überstehenden Mantel bilden. Bei einem Körper als Monolith wird dieser in einen entsprechenden Rohrabschnitt eingesetzt.

Bei einer Hintereinander-Anordnung von zwei Trägerkörpern in einem gemeinsamen Gehäuse werden die Trägerkörper derart angeordnet, daß bei der Halterung von zwei Trägerkörpern der stromab erste Trägerkörper mit abgaseintrittsseitig überstehendem Abschnitt des Innenmantels und der nachfolgende Trägerkörper mit abgasaustrittsseitig überstehendem Abschnitt des Innenmantels so angeordnet sind, daß die Halbschalen (2a, 2b) jeweils im Bereich dieser überstehenden Abschnitte (4) getrennt und mit diesen Abschnitten (4) verbunden sind, so daß identische Teile verwendet werden können.

Es hat sich als günstig erwiesen, daß die Länge des den Trägerkörper überstehenden Teiles des metallischen Mantels 0,75 bis 3 cm beträgt, vorteilhafterweise 1 bis 2 cm. Als besonders zweckmäßig hat sich ein Überstand von 1,3 cm erwiesen. Auf diesen überstehenden Abschnitt des Mantels des Trägerkörpers liegen mit geringem Abstand zueinander die Halbschalen auf und werden mitsamt dem Mantel verschweißt. Bei dieser Verschweißung kann es nicht zu lokalen, den Trägerkörper gefährdenden Überhitzungen kommen und die Schweißnaht ist leicht überprüfbar.

Mit dieser Halterung ist die Lage des Trägerkörpers festgelegt. Abgaseintrittsseitig erfolgt die Lagerung des Trägerkörpers in einem bekannten Gestrickring. Dabei weisen die beiden Halbschalen im Abgaseintrittsbereich des Trägerkörpers zwei radial-parallele Sicken mit zwischen diesen angeordneten Gestrickring auf. Dieser Gestrickring ist durch die beiden Sicken in seiner Lage fixiert und wirkt als Dämpfungs- und Dichtelement. Somit wird erreicht, daß kein Abgas den Trägerkörper umströmen und ungereinigt abgeführt werden kann. Die beiden Sicken bilden dabei gleichzeitig eine Versteifung und damit eine Absicherung gegen Schwingungsbrüche; der Gestrickring nimmt zugleich durch das pulsierende Abgas im Trägerkörper auftretende Schwingungen auf, so daß dieser ebenfalls geschützt ist.

Eine Weiterführung der Erfindung ist dadurch gekennzeichnet, daß der Abgaseintrittsstutzen einen zylindrischen Abschnitt aufweist, dessen Durchmesser gleich oder geringfügig größer ist als der Durchmesser des Trägerkörpers am Mantel. Unter geringfügig größer wird dabei ein Maß von etwa 2 bis 8 mm verstanden. Damit wird erreicht, daß der Trägerkörper auf den gesamten Abgaseintrittsquerschnitt beaufschlagt wird und trotzdem nur ein geringer Abgasstrom in den Spalt zwischen dem aus Halbschalen gebildeten Gehäuse und dem Mantel des Trägerkörpers eindringen kann. Dieser Abgasanteil kann jedoch durch den Gestrickring den Spalt nicht durchströmen, so daß kein ungereinigtes Abgas austreten kann. Zugleich verhindert dieser zylindrische Abschnitt, daß sich infolge thermischer Längenänderung der Abgaseintrittsstutzen in den Trägerkörper, insbesondere einen Monolithen eingräbt und diesen verletzt.

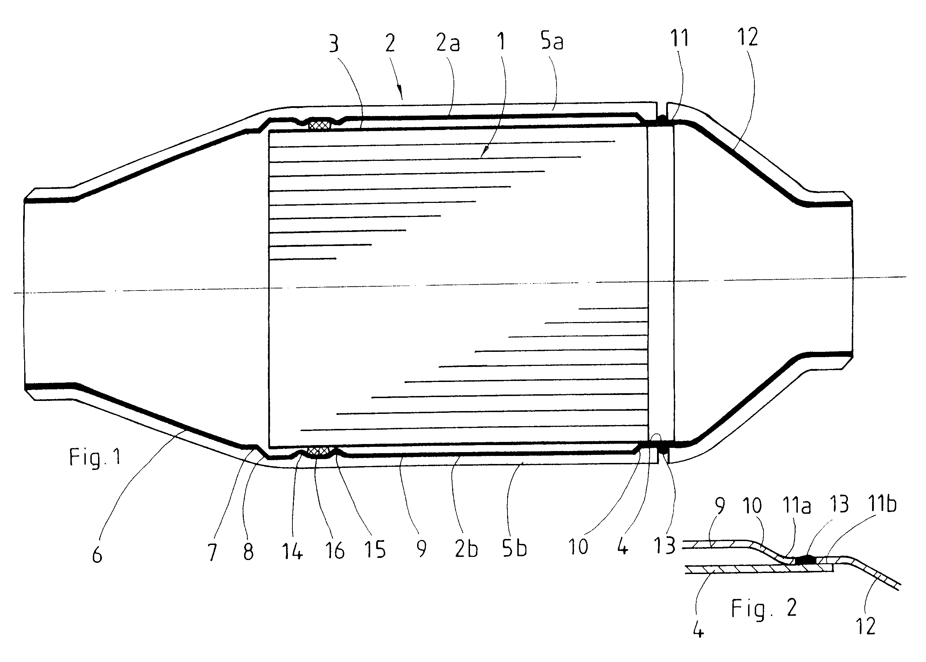

In den Figuren 1 und 2 ist ein Ausführungsbeispiel vereinfacht dargestellt. Es zeigt:
- Fig. 1:: einen Längsschnitt der Anordnung eines Trägerkörpers mit Gehäuse
- Fig. 2:: die Verbindungsstelle der radial getrennten Halbschalen mit dem Trägerkörpermantel, jeweils mit nur einem Trägerkörper.

In dem Ausführungsbeispiel ist ein Trägerkörper 1 dargestellt, der in einem Außenmantel 2 gelagert ist. Dieser Trägerkörper 1 kann sowohl ein katalytisch beschichteter Monolith als auch ein metallischer Wickelkörper oder ein Monolith zur Reinigung des Abgases von Partikeln sein. Der Trägerkörper 1 ist von einem metallischen Mantel 3 umgeben, der im Beispiel abgasaustrittsseitig mit einem Abschnitt 4 den Trägerkörper 1 überragt. Dieser Innenmantel 3 samt überstehendem Abschnitt 4 kann ein Rohrstück sein, in dem der Trägerkörper 1 eingebracht ist; er kann, falls der Trägerkörper 1 ein Wickelkörper ist, auch mit angeformt sein, so daß die letzte Wicklung den Mantel 3 samt überstehendem Abschnitt 4 bildet. Die Länge des überstehenden Abschnittes 4 beträgt 0,7 bis 3 cm, in einem ausgeführten Beispiel betrug sie 1,3 cm.

Der Außenmantel 2 ist aus zwei Halbschalen 2a, 2b gebildet. Im Ausführungsbeispiel sind beide Halbschalen identisch. Dies ist in der Regel der Fall, da das Abgas dem Trägerkörper mittig zugeführt wird. Die beiden Halbschalen können aber auch in Sonderfällen abweichende Form aufweisen, falls das Abgas außermittig zugeführt wird. Die Halbschalen 2a, 2b weisen an ihrer Längsseite Flansche 5a, 5b auf, die in der Figur 1 um 90° versetzt dargestellt sind. An diese Flansche 5a, 5b werden die Halbschalen 2a, 2b miteinander verschweißt oder anderweitig (durch Bördeln) fest miteinander verbunden. Die beiden Halbschalen 2a, 2b werden zunächst in einem Werkzeug jeweils komplett gezogen und dann erst wird das zylindrische Teil abgetrennt. Der aus den beiden Halbschalen 2a, 2b gebildete Außenmantel 2 weist einen Eintrittsstutzen 6 auf, an den sich ein kurzer zylindrischer Abschnitt 7 anschließt, dessen Innendurchmesser gleich oder geringfügig größer ist als der Außendurchmesser des Mantels 3, so daß das ausströmende Abgas den Trägerkörper 1 im gesamten Querschnitt beaufschlagen kann. An diesen kurzen - im Ausführungsbeispiel 2 - 3 cm langen - zylindrischen Abschnitt 7 schließt sich ein konischer Übergang 8 zu einem der Länge des oder der Trägerkörper 1 entsprechenden zylindrischen Abschnitt 9 an, der den Trägerkörper 1 übergreift. Es folgt im Austrittsbereich des Trägerkörpers 1 ein konischer Übergang 10 auf einen zylindrischen Abschnitt 11 mit dem Außendurchmesser des Mantels 3 bzw. des diesen überstehenden Abschnittes 4 als Innendurchmesser mit nachfolgenden konischen Austrittsstutzen 12. Der zylindrische, den Trägerkörper 1 übergreifende Abschnitt 9 des Außenmantels 2 weist im eintrittsseitigen Bereich des Trägerkörpers 1 zwei radial-parallel verlaufende Sicken 14, 15 auf, zwischen denen ein Gestrickring 16 eingebracht ist.

Die beiden Halbschalen 2a, 2b, aus denen der Außenmantel 2 gebildet ist, werden jeweils vor der Montage im Bereich des zylindrischen Abschnittes 11 in die Abschnitte 11a und 11b getrennt. Diese Abschnitte 11a, 11b liegen nach der Montage unter Bildung eines Spaltes auf dem überstehenden Abschnitt 4 des Mantels 3 des Trägerkörpers 1 auf, und sodann werden diese beiden zylindrischen Abschnitte 11a, 11b des Außenmantels 2 mitsamt dem überstehenden Abschnitt 4 des Innenmantels 3 mit der Schweißnaht 13 fest verbunden. Bei zwei hintereinander angeordneten Trägerkörpern 1 wird der zylindrische Abschnitt 9 auf dsa Maß des Mantels 3 eingezogen im Bereich des überstehenden Abschnittes 4 des Mantels 3, dort getrennt und mit dem überstehenden Abschnitt 4 des Mantels 3 verschweißt.

## Patentansprüche

1. Halterung mindestens eines Trägerkörpers (1) zur Abgasreinigung in Abgasanlagen von Fahrzeugen mit einem ein Gehäuse bildenden Außenmantel (2) aus zwei Halbschalen (2a, 2b) mit jeweils angeformten Flanschen (5a, 5b), einem zylindrischen Abschnitt (11) geringeren Durchmessers, Abgaseintrittsstutzen (6) und Abgasaustrittsstutzen (12) und
einem mit Abstand hierzu den Trägerkörper (1) umgebenden Innenmantel (3), der im Bereich einer Stirnseite mit dem Außenmantel (2) fest verbunden und im Bereich der anderen Stirnseite in einem Schiebesitz gehalten ist, dadurch gekennzeichnet, daß
- der Innenmantel (3) den Trägerkörper (1) an nur einer Seite mit einem Abschnitt (4) überragt,
- der Außenmantel (2) unter Bildung eines Luftspaltes den Innenmantel (3) umgibt,
- der Außenmantel (2) im Bereich des zylindrischen Abschnittes (11) radial geteilt ist und mit beiden Abschnitten (11a, 11b) auf dem Abschnitt (4) des Innenmantels (3) aufliegt und mit ihm fest verbunden ist,
- der Außenmantel (2) an der dem Abschnitt (11) abgewandten Seite radiale Sicken (14, 15) mit einem Gestrickring (16) zwischen dem Außenmantel (2) und dem Innenmantel (3) aufweist.

2. Halterung nach Anspruch 1, dadurch gekennzeichnet, daß der Trägerkörper (1) als metallischer Wickelkörper ausgebildet ist, dessen äußere Lage den auf einer Seite mit dem Abschnitt (4) überstehenden Innenmantel (3) bildet.

3. Halterung nach Anspruch 1 oder 2, dadurch gekennzeichnet, daß die Länge des den Trägerkörper (1) überstehenden Abschnittes (4) des Innenmantels (3) 0,75 bis 3 cm, vorzugsweise 1,0 cm beträgt.

4. Halterung nach einem der Ansprüche 1 bis 3, dadurch gekennzeichnet, daß der Abgasseintrittsstutzen (6) vor dem Trägerkörper (1) einen zylindrischen Abschnitt (7) aufweist, dessen Durchmesser gleich oder geringfügig größer ist als der Durchmesser des Trägerkörpers (1) samt Innenmantel (3).

5. Halterung nach einem der Ansprüche 1 bis 4, dadurch gekennzeichnet, daß bei der Halterung nur eines Trägerkörpers (1) der Abschnitt (4) des Innenmantels (3) abgasaustrittsseitig den Trägerkörper (1) überragt, so daß die Verbindung des Abschnittes (4) mit den aufliegenden Abschnitten (11a, 11b) der Halbschalen (2a, 2b) stromab erfolgt.

6. Halterung nach einem der Ansprüche 1 bis 5, dadurch gekennzeichnet, daß bei der Halterung von zwei Trägerkörpern (1) der stromab erste Trägerkörper (1) mit abgaseintrittsseitig überstehendem Abschnitt (4) des Innenmantels (3) und der nachfolgende Trägerkörper mit abgasaustrittsseitig überstehendem Abschnitt des Innenmantels so angeordnet sind, daß die Halbschalen (2a, 2b) jeweils im Bereich dieser überstehenden Abschnitte (4) getrennt und mit diesen Abschnitten (4) verbunden sind.

## Claims

1. Holder of at least one carrier body (1) for exhaust gas purification in exhaust gas systems of vehicles, having an outer casing (2) forming a housing and comprising two half shells (2a, 2b) each having integrally formed flanges (5a, 5b), a cylindrical portion (11) of smaller diameter, exhaust gas entry connection points (6) and exhaust gas exit connection points (12), and having an inner casing (3) surrounding the carrier body (1) in a manner spaced from the outer casing (2), the inner casing (3) being fixedly connected to the outer casing (2) in the region of one end side and being held in a sliding seating in the region of the other end side,
characterized in that
- the inner casing (3) projects beyond the carrier body (1) on only one side by means of a portion (4),
- the outer casing (2) surrounds the inner casing (3), forming an air gap,
- the outer casing (2) is radially divided in the region of the cylindrical portion (11) and, by means of both portions (11a, 11b), lies on the portion (4) of the inner casing (3) and is fixedly connected thereto,
- the outer casing (2) has, on the side remote from the portion (11), radial beads (14, 15) having a knitted material ring (16) between the outer casing (2) and the inner casing (3).

2. Holder according to Claim 1, characterized in that the carrier body (1) is constructed as a metal winding body whereof the outer layer forms the inner casing (3) projecting on one side by means of the portion (4).

3. Holder according to Claim 1 or 2, characterized in that the length of the portion (4) of the inner casing (3) which projects beyond the carrier body (1) is 0.75 to 3 cm, preferably 1.0 cm.

4. Holder according to one of Claims 1 to 3, characterized in that the exhaust gas entry connection piece (6) has, before the carrier body (1), a cylindrical portion (7) whereof the diameter is the same or slightly larger than the diameter of the carrier body (1) together with the inner casing (3).

5. Holder according to one of Claims 1 to 4, characterized in that, where only one carrier body (1) is held, the portion (4) of the inner casing (3) projects on the exhaust gas exit side beyond the carrier body (1), with the result that the portion (4) is connected downstream to the portions (11a, 11b) of the half shells (2a, 2b) which lie on top.

6. Holder according to one of Claims 1 to 5, characterized in that, where two carrier bodies (1) are held, the first carrier body (1) in the downstream direction is arranged with the portion (4) of the inner casing (3) projecting on the exhaust gas entry side and the following carrier body is arranged with the portion of the inner casing projecting on the exhaust gas exit side, in that the half shells (2a, 2b) are in each case separated in the region of these projecting portions (4) and connected to these portions (4).

## Revendications

1. Montage d'au moins un support (1) pour purifier les gaz d'échappement d'installations de gaz d'échappement de véhicules, comprenant une enveloppe externe (2) qui forme un carter et qui est composée de deux demi-coques (2a, 2b) munies de brides (5a, 5b), d'une partie cylindrique (11) de diamètre plus faible, d'une tubulure d'arrivée des gaz d'échappement (6) et d'une tubulure d'évacuation des gaz d'échappement (12), comprenant également une enveloppe interne (3) entourant le support (1) avec un écart par rapport à la précédente, qui est reliée fixement à l'enveloppe externe (2) dans la zone d'une face frontale et qui est maintenue avec un ajustement appuyé dans la zone de l'autre face frontale, caractérisé en ce que
- une partie (4) de l'enveloppe interne (3) ne dépasse du support (1) que d'un côté,
- l'enveloppe externe (2) entoure l'enveloppe interne (3) en formant une fente d'air,
- l'enveloppe externe (2) est séparée radialement dans la zone de la partie cylindrique (11), repose avec les deux parties (11a, 11b) sur la partie (4) de l'enveloppe interne (3) et y est reliée fixement,
- l'enveloppe externe (2) présente sur le côté éloigné de la partie (11) des moulures radiales (14, 15) et une bague en tricot (16) entre l'enveloppe externe (2) et l'enveloppe interne (3).

2. Montage selon la revendication 1, caractérisé en ce que le support (1) est réalisé en tant que bobine métallique dont la couche extérieure forme l'enveloppe interne (3) dépassant d'un côté avec la partie (4).

3. Montage selon la revendication 1 ou 2, caractérisé en ce que la longueur de la partie (4) de l'enveloppe interne (3) dépassant du support (1) est comprise entre 0,75 et 3 cm, et s'élève, de préférence, à 1,0 cm.

4. Montage selon l'une des revendications 1 à 3, caractérisé en ce que la tubulure d'arrivée des gaz d'échappement (6) présente, à l'avant du support (1), une partie cylindrique (7) dont le diamètre est égal ou légèrement supérieur au diamètre du support (1) incluant l'enveloppe interne (3).

5. Montage selon l'une des revendications 1 à 4, caractérisé en ce que, dans le cas où un seul support (1) est monté, la partie (4) de l'enveloppe interne (3) dépasse du support (1) du côté où les gaz d'échappement sont évacués, de sorte que l'assemblage de la partie (4) et des parties (11a, 11b) des demi-coques (2a, 2b) qui y reposent est réalisé en aval par rapport au sens de circulation des gaz d'échappement.

6. Montage selon l'une des revendications 1 à 5, caractérisé en ce que, dans le cas où deux supports (1) sont montés, le premier support (1) par rapport au sens de circulation des gaz d'échappement est disposé avec la partie (4) de l'enveloppe interne (3) dépassant du côté de l'arrivée des gaz d'échappement et le support suivant, avec la partie de l'enveloppe interne dépassant du côté de l'évacuation des gaz d'échappement, de manière à ce que les demi-coques (2a, 2b) soient chacune séparées dans la zone de ces parties saillantes (4) et soient reliées à ces parties (4).
